# EUROPÄISCHE PATENTSCHRIFT

(11) **EP 2 918 392 B1**
(45) Veröffentlichungstag und Bekanntmachung des Hinweises auf die Patenterteilung: **19.09.2018**
(21) Anmeldenummer: 15000490.1
(22) Anmeldetag: 19.02.2015
(51) Int. Cl.: B29C 65/00, B29C 63/00, B27D 5/00

(54) **Verfahren und Vorrichtung zur Herstellung einer Kantenkaschierung**
Method and device for edge lamination
Procédé et dispositif de fabrication d'un doublage de bord

(30) Priorität: 15.03.2014 DE 102014003766
(43) Veröffentlichungstag der Anmeldung: 16.09.2015
(73) Patentinhaber: IMA Klessmann GmbH Holzbearbeitungssysteme, 32312 Lübbecke (DE)
(72) Erfinder: Seifert, Uwe, 32361 Preußisch Oldendorf (DE); Hollmer, Wilfried, 32369 Rahden (DE); Hucke, Helmut, 32312 Lübbecke (DE)
(74) Vertreter: Schober, Mirko

(56) Entgegenhaltungen:
- EP-A1- 2 239 115
- EP-A2- 0 875 361
- EP-A2- 1 388 635
- EP-A2- 1 800 813
- CH-A- 462 437
- DE-A1- 1 621 814
- DE-A1-102009 036 036
- DE-A1-102010 004 092
- DE-A1-102011 015 898
- DE-B- 1 224 466
- DE-B- 1 276 893
- DE-B- 1 299 113
- DE-C1- 19 947 164
- DE-U1- 29 817 408
- DE-U1- 29 821 399
- FR-A- 1 433 314

## Beschreibung

Die Erfindung betrifft ein Verfahren und eine Vorrichtung zur Herstellung einer Kantenkaschierung gemäß den Oberbegriffen der Ansprüche 1 und 6. Ein solches Verfahren und eine solche Vorrichtung sind aus der DE 10 2009 036 036 A1 bekannt. Unter einer Kantenkaschierung im Sinne der vorliegenden Erfindung ist die Kaschierung einer Schmalseite eines plattenförmigen bzw. flächigen Bauteils zu verstehen. Bei dem Bauteil handelt es sich insbesondere um eine Platte aus einem Holz- oder einem Holzersatzwerkstoff, wie beispielsweise eine Möbelplatte, weiter insbesondere handelt es sich um eine Tür.
Die Schmalseiten solcher Bauteile weisen häufig einen vorspringenden und einen zurückspringenden Bereich auf. Dadurch ergibt sich im Bereich der Schmalseite häufig ein stufenförmiger Absatz. Dieser wird auch als Falz bezeichnet. Beispielsweise spricht man im Zusammenhang mit Türen von einer gefalzten Tür. Es kann sich bei dem zurückspringenden Bereich jedoch auch um einen abgerundeten Bereich oder um eine Fase handeln.
Diese vorspringenden und zurückspringenden Bereiche erschweren das Aufbringen üblicher Kantenkaschierungsmaterialien, bei denen es sich insbesondere um sogenannte Kantenbänder handelt, erheblich. Um die gesamte Schmalseite einschließlich des stufenförmigen Absatzes mit dem Kantenkaschierungsmaterial vollständig zu bedecken, ist es notwendig, dieses Kaschierungsmaterial im Bereich des stufenförmigen Absatzes zwischen dem vorspringenden und dem zurückspringenden Bereich abzubiegen. Dabei sind die hierbei erzielbaren Biegeradien begrenzt.

Nach dem Stand der Technik werden Kantenkaschierungsmaterialien der in Rede stehenden Art u.a. dadurch auf eine Schmalseite eines Bauteils aufgebracht, dass ein Kleber, insbesondere ein Schmelzkleber, auf die Schmalseite und/ oder das Kantenkaschierungsmaterial aufgebracht wird. Es ist allerdings auch möglich, dass die eine Funktionsschicht des Kantenkaschierungsmaterials aktiviert wird, um eine dauerhafte Verbindung zwischen Schmalseite und Kantenkaschierungsmaterial zu ermöglichen. Bei der Aktivierung kann es sich beispielsweise um einen Hitzeeintrag handeln, mit dem eine Funktionsschicht in Form einer Schmelzkleberschicht oder Kunststoffschicht aufgeschmolzen bzw. angeschmolzen wird. Anschließend wird das Kantenkaschierungsmaterial auf die Schmalseite aufgebracht. Dabei wird das Kantenkaschierungsmaterial häufig unter einem definierten Anpressdruck an die Schmalseite angedrückt, um das Kantenkaschierungsmaterial endgültig auf die Schmalseite aufzubringen.

Schmalseiten mit einem vorspringenden und einem zurückspringenden Bereich erfordern hierbei regelmäßig kompliziert gestaltete Andruckwerkzeuge. Weiterhin ist es schwierig, insbesondere im Bereich eines stufenförmigen Absatzes, den Anpressdruck sowohl in zur Schmalseite rechtwinkliger Richtung aufzubringen, um den vorspringenden Bereich zu kaschieren, als auch einen schräg oder parallel zur Schmalseite gerichteten Anpressdruck aufzubringen, um das Kantenkaschierungsmaterial auch mit den Flächen, die nicht parallel zur Schmalseite orientiert sind, zuverlässig zu verbinden.

Der Erfindung liegt daher die Aufgabe zugrunde, ein Verfahren und eine Vorrichtung zur Herstellung einer Kantenkaschierung zur Verfügung zu stellen, bei dem die vorgenannten Nachteile nicht oder zumindest nur in vermindertem Maße auftreten.
Die Aufgabe wird gelöst durch ein Verfahren mit den Merkmalen des Anspruchs 1 und eine Vorrichtung mit den Merkmalen des Anspruchs 6. Die Merkmale der abhängigen Ansprüche betreffen vorteilhafte Ausführungsformen.

Dabei ist das Kantenkaschierungsmaterial bzw. das Kantenband - im Folgenden wird der Begriff Kantenband synonym für ein Kantenkaschierungsmaterial, insbesondere ein Kantenband, verwendet - bereits mit einem vorspringenden Bereich der Schmalseite der Tür, verbunden. Dies bringt den Vorteil mit sich, dass beim Andrücken des Kantenbandes an den zurückspringenden Bereich der Schmalseite, entstehende Biegespannungen im Kantenband bereits durch die schon bestehende Verbindung des Kantenbandes mit einem Teilbereich der Schmalseite aufgenommen werden können. Gleiches gilt auch insbesondere für jene Bereiche der Schmalseite der Tür, die nicht parallel zur Schmalseite der Tür orientiert sind. Dies betrifft insbesondere Abrundungen sowie die nicht parallel zur Schmalseite der Tür orientierten Flächen stufenförmiger Absätze, wie sie sich üblicherweise insbesondere bei Falzen zwischen dem vorspringenden Bereich und dem zurückspringenden Bereich ergeben. Letztgenannte Flächen werden im Folgenden auch als Falzfläche bezeichnet.
Ein weiterer Vorteil des erfindungsgemäßen Verfahrens ist, dass dadurch, dass die Schritte zur Verbindung einzelner Teilbereiche des Kantenbandes mit einzelnen Teilbereichen der Schmalseite hintereinander geschaltet sind, insbesondere die Arbeitsschritte, die mit einer Verformung des Kantenbandes einhergehen, stattfinden, wenn dieses bereits teilflächig mit der Schmalseite verbunden und dadurch in seiner relativen Position zur Schmalseite fixiert ist.

Die Vorrichtung ist vorzugsweise derart gestaltet, dass eine Funktionsschicht eines zumindest bereits teilflächig auf die Schmalseite aufgebrachten Kantenbandes aktivierbar ist. Hierfür weist die Vorrichtung eine entsprechend gestaltete und/oder an der Vorrichtung angeordnete Aktivierungseinrichtung auf. Die erfindungsgemäße Gestaltung bzw. Anordnung der Aktivierungsvorrichtung bedeutet insbesondere, dass mit ihr die Aktivierung einer der Schmalseite zugewandten Teilfläche des bereits teilflächig mit der Schmalseite verbundenen Kantenbandes möglich ist.
Die Aktivierungseinrichtung ist vorzugsweise in einen Spalt, der zwischen einem Bereich der Schmalseite und dem bereits zumindest teilflächig aufgebrachten Kantenband gebildet ist, einbringbar. Vorzugsweise handelt es sich in diesem Zusammenhang um einen zurückspringenden Bereich der Schmalseite. Der zurückspringende Bereich ist vorzugsweise der zurückspringende Bereich eines Falzes. Es ist jedoch auch ein Spalt zwischen dem Kantenband und einem anderweitig gestalteten zurückspringenden Bereich der Schmalseite, beispielsweise eine, vorzugsweise an einen vorspringenden Bereich der Schmalseite, angrenzende Verrundung und/oder Abschrägung als Begrenzung des Spalts möglich.

Das Einbringen der Schwächungslinie findet vorzugsweise vor der ersten Aktivierung der Funktionsschicht des Kantenbandes statt. Die Schwächungslinie verläuft vorteilhafterweise entlang der Längsersteckung des Kantenbandes bzw. bei einer erfindungsgemäßen Kantenkaschierung vorzugsweise entlang der Längserstreckung der Schmalseite.

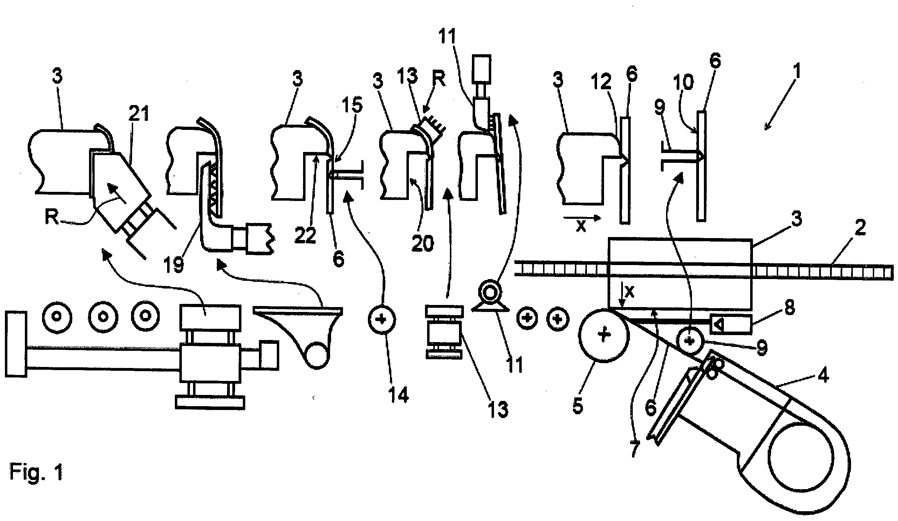

Es kann aber auch, insbesondere zur Einbringung einer Schwächungslinie auf der von der Schmalseite abgewandten Kante des Kantenbandes, vorteilhaft sein, dass die Einrichtung zur Einbringung der Schwächungslinie derart angeordnet ist, dass sie zur Einbringung der Schwächungslinie nach dem ersten Aufbringen des Kantenbandes auf das Kantenband einwirkt. Vorzugsweise weist die erfindungsgemäße Vorrichtung, insbesondere um Schwächungslinien auf den beiden einander gegenüberliegende Flächen des Kantenbandes einbringen zu können, eine Mehrzahl Einrichtungen zur Einbringung von Schwächungslinien auf.
Bei der ersten Aktivierung und/oder bei einer und/oder mindestens einer weiteren Aktivierung, vorzugsweise allen weiteren Aktivierungen der Funktionsschicht, handelt es sich um eine Aktivierung der Funktionsschicht durch einen Laser oder einen heißen Gasstrom, insbesondere einen heißen Luftstrom. Entsprechend handelt es sich bei der Funktionsschicht vorzugsweise um eine Heiß- bzw. Schmelzkleberschicht oder eine aufschmelzbare oder anschmelzbare Kunststoffschicht. Als besonders vorteilhaft hat es sich herausgestellt, wenn die erste Aktivierung mit einem Laser und die weiteren Aktivierungen mit einem heißen Gas-, insbesondere Luftstrom, erfolgen.
Die Erfindung wird im Folgenden anhand der Figuren 1 bis 3 schematisch näher erläuter.
Fig. 1 zeigt eine stark vereinfachte Prinzipskizze einer erfindungsgemäßen Vorrichtung.
Fig. 2 zeigt eine Teilschnittdarstellung einer nach dem erfindungsgemäßen Verfahren herstellbaren Kantenkaschierung mit einem Andruckwerkzeug im Angriff an einem abgerundeten vorspringenden Bereich der Schmalseite.
Fig. 3 zeigt ein beispielhaftes Kantenband mit einer Funktionsschicht und eingebrachten Schwächungslinien.
Fig. 4 zeigt eine Teilschnittdarstellung einer nach dem erfindungsgemäßen Verfahren herstellbaren Kantenkaschierung vor dem Aufbringen der Kantenkaschierung auf den vorspringenden Bereichen, nach dem Aufbringen der Kantenkaschierung auf den vorspringenden Bereich und nach dem Aufbringen der Kantenkaschierung auf die zurückspringenden Bereiche bei einem Tonnenprofil.
Fig. 5 zeigt eine Teilschnittdarstellung einer nach dem erfindungsgemäßen Verfahren herstellbaren Kantenkaschierung vor dem Aufbringen der Kantenkaschierung auf den vorspringenden Bereichen, nach dem Aufbringen der Kantenkaschierung auf den vorspringenden Bereich und nach dem Aufbringen der Kantenkaschierung auf die zurückspringenden Bereiche bei einem Faseprofil.
Fig. 6 zeigt eine Teilschnittdarstellung einer nach dem erfindungsgemäßen Verfahren herstellbaren Kantenkaschierung vor dem Aufbringen der Kantenkaschierung auf den vorspringenden Bereichen, nach dem Aufbringen der Kantenkaschierung auf den vorspringenden Bereich und nach dem Aufbringen der Kantenkaschierung auf die zurückspringenden Bereiche bei einem Radienprofil.

Die beispielhafte erfindungsgemäße Vorrichtung weist vorteilhafterweise eine Fördereinrichtung 2 zur Förderung der Bauteile 3, insbesondere bei der Durchführung des erfindungsgemäßen Verfahrens, auf. Bei der Fördereinrichtung handelt es sich vorteilhafterweise um eine lineare Fördereinrichtung, beispielsweise um ein Förderband oder einen Kettenförderer.
Vorteilhafterweise weist die erfindungsgemäße Vorrichtung 1 eine Zuführeinrichtung 4 zur Zuführung des Kantenbandes auf. Dabei kann es sich beispielsweise um ein Magazin für ein Kantenband oder eine Mehrzahl Kantenbänder handeln. Diese werden einem Zuführbereich zugeführt, der sich vorzugsweise zwischen der Zuführeinrichtung 4 und einer ersten Andruckeinrichtung 5 erstreckt. Die erste Andruckeinrichtung 5 dient zum Andrücken des Kantenbandes 6 an die Schmalseite 7 des Bauteils 3 beim ersten Aufbringen des Kantenbandes 6 auf die Schmalseite 7.
Im Zuführbereich ist eine erste Aktivierungseinrichtung 8 angeordnet. Bei dieser handelt es sich vorzugsweise um einen Laser. Die erste Aktivierungseinrichtung 8 ist vorzugsweise so angeordnet, dass sie auf das Kantenband 6 einwirkt, nachdem eine erste Einrichtung 9 zur Einbringung einer Schwächungslinie auf das Kantenband einwirkt. Die Einrichtung 9 ist derart angeordnet, dass sie eine Schwächungslinie auf der der Schmalseite 7 zugewandten Fläche 10 des Kantenbands 6 in das Kantenband 6 einbringen kann.
Die erfindungsgemäße Vorrichtung 1 weist darüber hinaus eine weitere Aktivierungseinrichtung 11 auf. Die erfindungsgemäße Vorrichtung 1 ist derart gestaltet, insbesondere ist die erfindungsgemäße weitere Aktivierungseinrichtung 11 derart angeordnet, dass diese auf die der Schmalseite 7 zugewandten Seite 10 des Kantenbandes 6 einwirken kann. Insbesondere ist die weitere Aktivierungseinrichtung 11 derart angeordnet, dass sie in einen zwischen einem zurückspringenden abgerundeten Bereich 12 der Schmalseite 7 und dem Kantenband 6 gebildeten Spalt einwirken kann. Bei der weiteren Aktivierungseinrichtung 11 handelt es sich vorzugsweise um eine Heißluftdüse zur Lenkung eines Heißluftstroms auf die der Schmalseite 7 zugewandten Fläche 10 des Kantenbandes 6.

Die vorteilhafte Vorrichtung 1 ist derart gestaltet, dass nach dem Einwirken der weiteren Aktivierungseinrichtung 11 auf das Kantenband 6 eine weitere Andruckeinrichtung 13 auf das Kantenband 6 einwirken kann. Diese ist vorzugsweise derart gestaltet, dass sie beim Aufbringen des Kantenbands 6 auf die Schmalseite 7 einen Anpressdruck aus einer zur Lotrichtung X der Schmalseite 7 nicht parallelen Richtung R auf das Kantenband 6 ausübt.

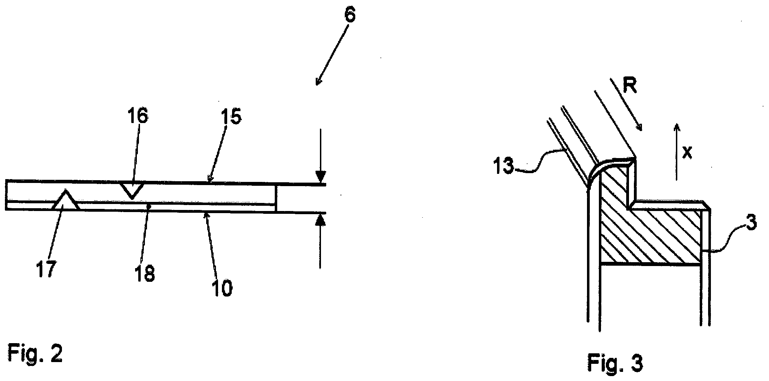

Die beispielhafte Vorrichtung weist darüber hinaus eine weitere Einrichtung 14 zur Einbringung einer Schwächungslinie auf. Diese ist derart an der Vorrichtung 1 angeordnet, dass sie an der von der Schmalseite 7 abgewandten Seite 15 des bereits zumindest teilflächig auf die Schmalseite 7 aufgebrachten Kantenbandes 6 angreift. In Fig. 2 ist schematisch ein Kantenband 6 mit darin eingebrachten Schwächungslinien 16 und 17 dargestellt.

Die beispielhafte Schwächungslinie 16 und/oder die beispielhafte Schwächungslinie 17 können - wie in Fig. 2 dargestellt - als V-förmige Einkerbungen bzw. Furchen, die sich vorzugsweise entlang der Haupterstreckungsrichtung des Kantenbandes erstrecken, ausgeführt sein. Dabei kann die auf der zur Verbindung mit der Schmalseite 7 vorgesehenen Fläche 10 des Kantenbands 6 eingebrachte Schwächungslinie 17 derart tief in das Kantenband 6 eingebracht sein, dass sie eine aktivierbare Funktionsschicht 18 des Kantenbands durchdringt. Alternativ ist es allerdings auch möglich, dass das Kantenband lediglich, zumindest im Wesentlichen, aus einer einzigen aktivierbaren Schicht 18 besteht.

Vorzugsweise weist die erfindungsgemäße Vorrichtung 1 eine weitere Aktivierungseinrichtung 19 auf. Die weitere Aktivierungseinrichtung 19 ist dabei in einen zwischen einem zurückspringenden Bereich 20 der Schmalseite 7 und einem Bereich der Fläche 10 des Kantenbands 6, die der Schmalseite 7 zugewandt ist, ausgebildeten Spalt einbringbar und/oder kann im Bereich eines solchen Spalts zur Aktivierung einer Funktionsschicht 18 auf die der Schmalseite 7 zugewandten Fläche 10 einwirken. Vorteilhafterweise handelt es sich bei der weiteren Aktivierungseinrichtung 19 um eine Einrichtung, die geeignet ist, einen heißen Gasstrahl, insbesondere Luftstrahl, auf den zu aktivierenden Bereich der Fläche 10 zu lenken. Insbesondere handelt es sich um eine Heißluftdüse.

Die beispielhafte erfindungsgemäße Vorrichtung 1 weist darüber hinaus eine weitere Andruckeinrichtung 21 auf. Diese ist im gezeigten Beispiel vorzugsweise so gestaltet, dass sie derart auf das Kantenband einwirken kann, dass dieses gleichzeitig an den zurückspringenden Bereich 20 und die Falzfläche 22 angedrückt wird. Ermöglicht wird dies insbesondere durch eine winklige, vorzugsweise rechtwinklige, Form der Angriffsflächen der Andruckeinrichtung 21. Die Angriffsflächen sind jene Flächen, welche zur Ausübung des Drucks auf das Kantenband 6 mit dem Kantenband 6 in Berührung kommen.

Weiterhin wird der gleichzeitige Andruck an den zurückspringenden Bereich 20 und die Falzfläche 22 insbesondere auch dadurch ermöglicht, dass die Anpresskraft bzw. der Anpressdruck der weiteren Andruckeinrichtung 21 in einer Anpressrichtung R wirkt, die nicht parallel zu der Lotrichtung X der Schmalseite 7 verläuft. Vorzugsweise wirkt die Andruckkraft in einem Winkel von 20 bis 70°, weiter vorzugsweise in einem Winkel von 40 bis 50°, insbesondere zumindest im Wesentlichen 45°, zur Lotrichtung X der Schmalseite 7.

Bei der erfindungsgemäßen Vorrichtung wird aufgrund der Anordnung der einzelnen Einrichtungen zunächst ein zurückspringender abgerundeter Bereich 12, der an den vorspringenden Bereich 24 angrenzt, mit dem Kantenband 6 verbunden, danach wird das Kantenband erneut aktiviert und mit dem vorzugsweise an die Falzfläche angrenzenden zurückspringenden Bereich 20 und der Falzfläche 22 verbunden. Natürlich ist auch eine umgekehrte Reihenfolge dieser Verfahrensschritte möglich, d.h. zuerst findet eine Aktivierung der Funktionsschicht 18 mit anschließendem Andrücken des Kantenbands 6 an die Falzfläche 22 und den zurückspringenden Bereich 20 statt, danach wird - wie in Fig. 3 dargestellt - das Kantenband 6 durch Aktivieren der Funktionsschicht 18 und anschließendes Andrücken an den abgerundeten Bereich 12 mit dem abgerundeten Bereich 12 verbunden.

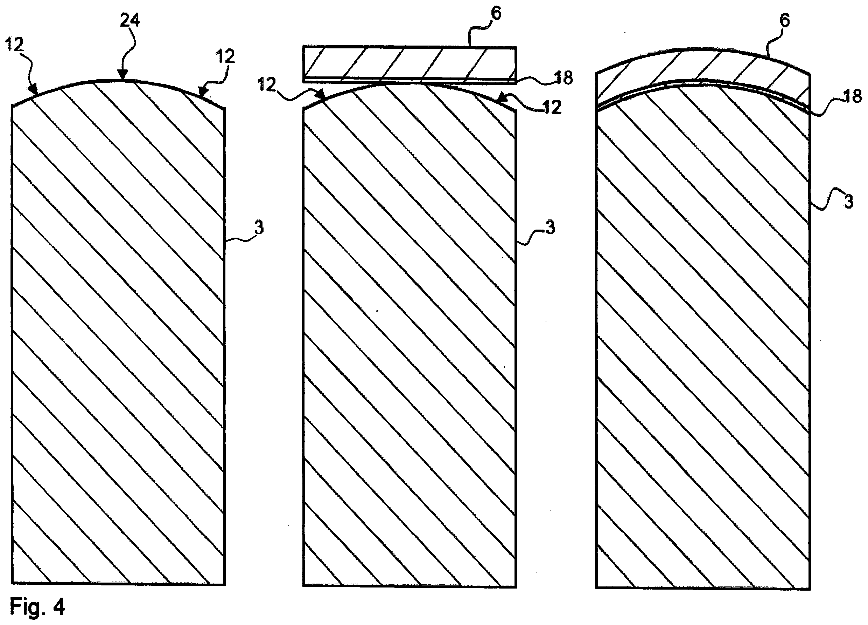

Weitere beispielhafte vorteilhafte Ausführungsbeispiele für Kantenkaschierungen, wie sie mit dem erfindungsgemäßen Verfahren bzw. mit der erfindungsgemäßen Vorrichtung herstellbar sind, in den Fig. 4 bis 6 dargestellt. Dabei sind jeweils zunächst die zu kaschierende Kante des Bauteils 3 vor dem erstmaligen Aufbringen des Kantenbandes 6 auf die Schmalseite 7, die Kantenkaschierung nach dem ersten Aufbringen des Kantenbandes 6 auf den vorspringenden Bereich 24 und die fertige Kantenkaschierung dargestellt.

Die in Fig. 4 dargestellte Schmalseite 7 weist ein sogenanntes Tonnenprofil auf. Dies bedeutet, die Schmalseite 7 des Bauteils 3 ist im Querschnitt bogenförmig gestaltet, was dazu führt, dass die zurückspringenden abgerundeten Bereiche 12 und der vorspringende Bereich 24, welche die Schmalseite 7 bilden, fließend ineinander übergehen. In einem solchen Bereich ist als vorspringender Bereich 24 der Bereich anzusehen, mit dem sich beim erstmaligen Aufbringen des Kantenbandes 6 auf die Schmalseite 7 die Funktionsschicht 18 des Kantenbandes 6 verbindet.

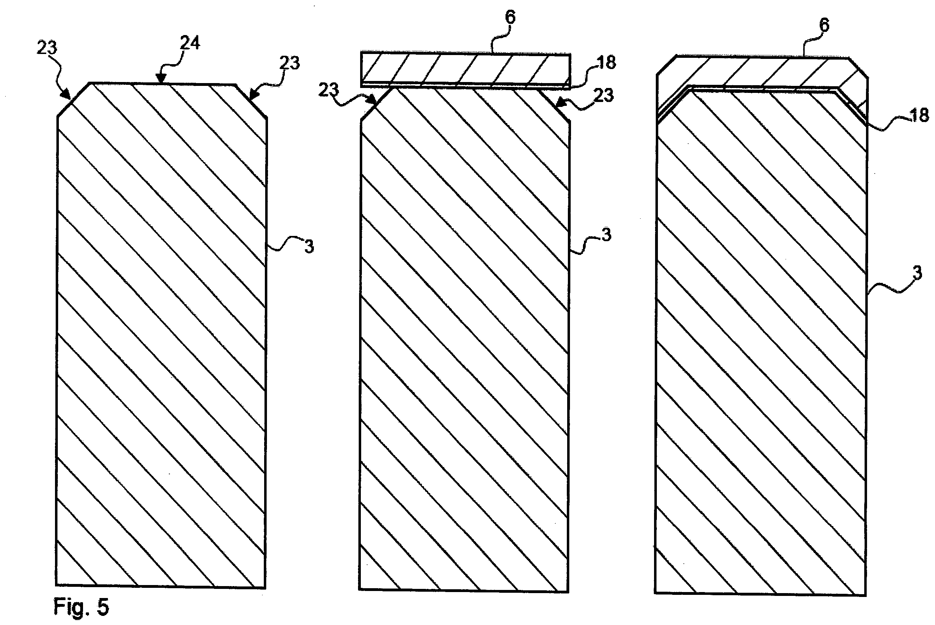

Die in Fig. 5 dargestellte Kantenkaschierung weist ein sogenanntes Faseprofil auf. Dabei schließen sich an den vorspringenden Bereich 24 zurückspringende Bereiche 23 an, die als Fasen, d.h. als Schrägflächen, ausgebildet sind. Bei derartigen Profilen ist es vorteilhaft, wenn das Kantenband 6 eine Schwächungslinie aufweist. Diese ist insbesondere auf der der Schmalseite zugewandten Seite des Kantenbands angeordnet bzw. in diese Seite eingebracht und/oder derart angeordnet, dass sie sich im Bereich des Übergangs vom vorspringenden Bereich 24 zu dem zurückspringenden Bereich 23 befindet. Es ist besonders vorteilhaft, wenn jedem Übergang zwischen dem vorspringenden Bereich 24 und den zurückspringenden Bereichen 23 eine Schwächungslinie 17 zugeordnet ist. Im Fall des in Fig. 5 dargestellten Beispiels würde es sich daher vorteilhafterweise um zwei - nicht dargestellte - Schwächungslinien 17 handeln.

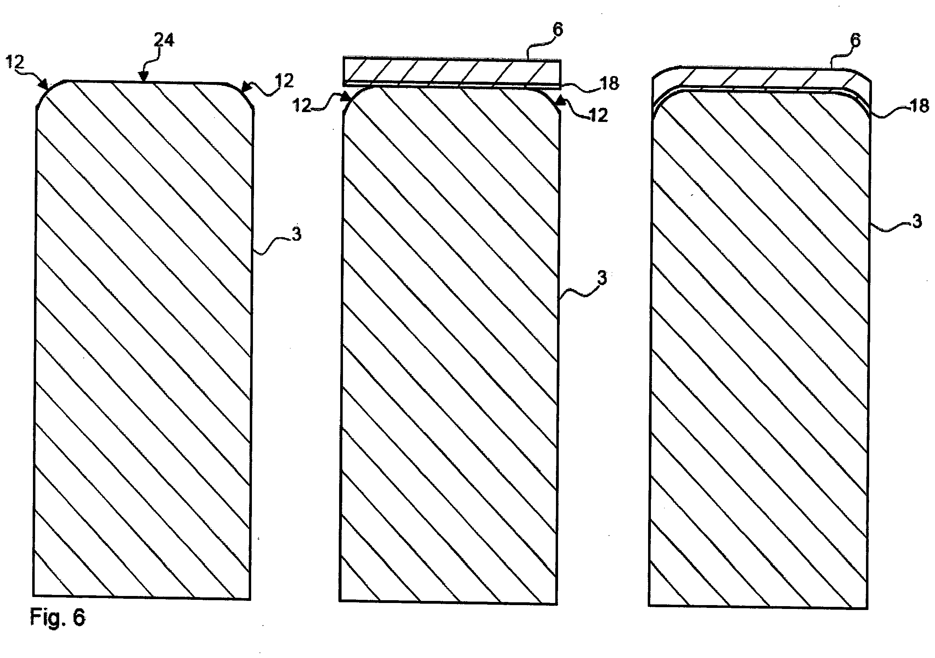

In Fig. 6 ist beispielhaft ein sogenanntes Radienprofil dargestellt. Dabei schließen sich an den vorspringenden Bereich 24 zurückspringende abgerundete Bereiche 12 an. Wie bei den Fig. 4 und 5 ist das Profil in Fig. 6 symmetrisch gestaltet, d.h. die zurückspringenden Bereiche 12, die sich an den vorspringenden Bereich 24 anschließen, sind beidseits des vorspringenden Bereichs 24 gleichartig gestaltet. Alternativ hierzu sind nicht dargestellte beliebige Kombinationen möglich, die eine unterschiedliche Gestaltung der zurückspringenden Bereiche auf der jeweiligen Seite des vorspringenden Bereichs 24 aufweisen oder bei denen sich nur auf einer Seite des vorspringenden Bereichs 24 ein zurückspringender Bereich befindet.

### Bezugszeichenliste:

- 1: Vorrichtung
- 2: Fördereinrichtung
- 3: Bauteil
- 4: Zuführeinrichtung
- 5: erste Andruckeinrichtung
- 6: Kantenkaschierungsmaterial, insbesondere Kantenband
- 7: Schmalseite
- 8: erste Aktivierungseinrichtung
- 9: erste Einrichtung zur Einbringung einer Schwächungslinie
- 10: der Schmalseite zugewandte Fläche des Kantenbandes
- 11: weitere Aktivierungseinrichtung
- 12: zurückspringender abgerundeter Bereich
- 13: weitere Andruckeinrichtung
- 14: weitere Einrichtung zur Einbringung einer Schwächungslinie
- 15: von der Schmalseite abgewandte Fläche
- 16: Schwächungslinie
- 17: Schwächungslinie
- 18: Funktionsschicht
- 19: weitere Aktivierungseinrichtung
- 20: zurückspringender, an die Falzfläche angrenzender Bereich
- 21: weitere Andruckeinrichtung
- 22: Falzfläche
- 23: zurückspringender Bereich einer Fase
- 24: vorspringender Bereich

- X: Lotrichtung
- R: Anpressrichtung

## Patentansprüche

1. Verfahren zur Herstellung einer Kantenkaschierung, wobei ein Kantenkaschierungsmaterial (6), insbesondere ein Kantenband, auf eine einen vorspringenden Bereich (24) und einen zurückspringenden Bereich (20, 12, 23) aufweisende, insbesondere gefalzte, Schmalseite (7) eines flächigen Bauteils (3), insbesondere einer Platte aus einem Holz-oder Holzersatzwerkstoff und/ oder einer Tür und/oder Möbelplatte, aufgebracht wird, wobei eine erste, zumindest bereichsweise, Aktivierung einer Funktionsschicht (18) in Gestalt einer auf- oder anschmelzbaren Kunststoffschicht des Kantenkaschierungsmaterials (6) zur Ermöglichung einer dauerhaften Verbindung zwischen Schmalseite (7) und Kantenkaschierungsmaterial (6) durchgeführt wird und das Kantenkaschierungsmaterial (6) erstmalig auf den vorspringenden Bereich (24) der Schmalseite, aufgebracht wird, wobei das Kantenkaschierungsmaterial (6) auf den zurückspringenden Bereich (12, 20, 23) aufgebracht wird, nachdem das Kantenkaschierungsmaterial erstmalig auf den vorspringenden Bereich (24) der Schmalseite, aufgebracht worden ist,
**dadurch gekennzeichnet,**
**dass** mindestens eine weitere Aktivierung der Funktionsschicht (18) des Kantenkaschierungsmaterials (6) durchgeführt wird, nachdem das Kantenkaschierungsmaterial (6) bereits, zumindest teilflächig, auf die Schmalseite aufgebracht worden ist, wobei vor dem ersten Aufbringen des Kantenkaschierungsmaterials (6) auf die Schmalseite (7), vorzugsweise vor der ersten Aktivierung, eine Schwächungslinie (16, 17) in das Kantenkaschierungsmaterial (6) auf dessen der Schmalseite zugewandten Seite durch ein materialabtragendes Verfahren eingebracht wird, indem eine Kerbe oder Furche in das Kantenkaschierungsmaterial (6) eingefräst oder eingeschnitten wird, wobei wenigstens eine Aktivierung, vorzugsweise die erste Aktivierung, durch einen Laser oder heißen Gasstrom, insbesondere Luftstrom, erfolgt.

2. Verfahren nach Anspruch 1,
**dadurch gekennzeichnet,**
**dass** eine weitere Aktivierung der Funktionsschicht (18) des Kantenkaschierungsmaterials (6) zur Ermöglichung einer dauerhaften Verbindung zwischen Kantenkaschierungsmaterial (6) und einem abgerundeten Bereich (12) der Schmalseite (7) durchgeführt wird.

3. Verfahren nach einem der vorigen Ansprüche,
**dadurch gekennzeichnet,**
**dass** eine weitere Aktivierung der Funktionsschicht (18) des Kantenkaschierungsmaterials (6) zur Ermöglichung einer dauerhaften Verbindung zwischen Kantenkaschierungsmaterial und dem zurückspringenden Bereich (20, 12, 23) der Schmalseite (7) durchgeführt wird.

4. Verfahren nach einem der vorigen Ansprüche
**dadurch gekennzeichnet,**
**dass** vor der weiteren Aktivierung zur Ermöglichung einer dauerhaften Verbindung zwischen Kantenkaschierungsmaterial (6) und dem zurückspringenden Bereich (20, 12, 23) der Schmalseite, insbesondere nach der ersten Aktivierung, eine Schwächungslinie (16) in das Kantenkaschierungsmaterial (6) eingebracht wird.

5. Verfahren nach einem der vorigen Ansprüche,
**dadurch gekennzeichnet,**
**dass** wenigstens eine weitere Aktivierung, vorzugsweise die Aktivierung zur Ermöglichung einer Verbindung zwischen Kantenkaschierungsmaterial (6) und dem zurückspringenden Bereich (20, 12, 23) der Schmalseite (7), durch Heißluft erfolgt.

6. Vorrichtung (1) zur Herstellung einer Kantenkaschierung durch Aufbringung eines Kaschierungsmaterials (6), insbesondere eines Kantenbandes, auf die einen vorspringenden Bereich (24) und einen zurückspringenden Bereich (20, 12, 23) aufweisende, insbesondere gefalzte, Schmalseite (7) eines flächigen Bauteils (3), insbesondere einer Platte aus einem Holz- oder Holzersatzwerkstoff und/oder einer Tür, wobei die Vorrichtung (1) eine erste Aktivierungseinrichtung (8) zur Aktivierung einer Funktionsschicht des Kantenkaschierungsmaterials aufweist, wobei die Vorrichtung (1) derart gestaltet ist, dass das Kantenkaschierungsmaterial (6) auf den zurückspringenden Bereich (12, 20, 23) aufbringbar ist, nachdem das Kantenkaschierungsmaterial (6) auf den vorspringenden Bereich (24) aufgebracht worden ist,
**dadurch gekennzeichnet,**
**dass** die Vorrichtung (1) derart gestaltet ist, dass eine Funktionsschicht (18) einer bereits zumindest teilflächig auf einen vorspringenden Bereich (24) der Schmalseite, aufgebrachten Kantenkaschierung (6) durch eine weitere Aktivierungseinrichtung (11, 19) aktivierbar ist und wobei die Vorrichtung weiter eine Einrichtung (9) zum Einbringen einer Schwächungslinie in das Kantenkaschierungsmaterial (6) auf dessen der Schmalseite (7) zugewandten Seite aufweist, die so angeordnet und eingerichtet ist, dass sie die Schwächungslinie vor dem ersten Aufbringen des Kantenkaschierungsmaterials (6) auf den vorsprigenden Bereich (24) der Schmalseite, vorzugsweise vor der ersten Aktivierung, durch ein materialabtragendes Verfahren durch Einfräsen oder Einschneiden einer Kerbe oder Furche in das Kantenkaschierungsmaterial (6) einbringt, wobei die Vorrichtung zur Durchführung der wenigstens einen Aktivierung, vorzugsweise der ersten Aktivierung, dazu ausgelegt ist, die wenigstens eine Aktivierung durch einen Laser oder einen heißen Gasstrom, insbesondere Luftstrom, erfolgen zu lassen.

7. Vorrichtung (1) nach Anspruch 6,
**dadurch gekennzeichnet,**
**dass** die weitere Aktivierungseinrichtung (11, 19) in einen zwischen der Schmalseite (7), insbesondere dem zurückspringenden Bereich (20, 12, 23) und der zumindest teilflächig aufgebrachten Kantenkaschierung (6) gebildeten Spalt zur Aktivierung der Funktionsschicht (18) einbringbar ist.

8. Vorrichtung (1) nach Anspruch 6 oder 7,
**dadurch gekennzeichnet,**
**dass** die weitere Aktivierungseinrichtung eine Heißluftdüse aufweist.

## Claims

1. Method for manufacturing an edge lamination, wherein an edge lamination material (6), more particularly an edging band, is applied to a, more particularly folded, narrow side (7), having a projecting region (24) and a rebated region (20, 12, 23), of a flat component (3), more particularly a panel of wood or wood substitute and/or a door and/or a furniture panel, wherein a first activation is carried out in at least some regions of a function layer (18) in the form of a meltable or fusible plastics layer of the edge lamination material (6) in order to enable a permanent connection between the narrow side (7) and edge lamination material (6), and the edge lamination material (6) is applied first to the projecting region (24) of the narrow side, wherein the edge lamination material (6) is applied to the rebated region (12, 20, 23) after the edge lamination material has been applied for the first time to the projecting region (24) of the narrow side, **characterised in that** at least a further activation of the function layer (18) of the edge lamination material (6) is carried out after the edge lamination material (6) has already been applied, at least over part of the surface of the narrow side, wherein prior to first applying the edge lamination material (6) to the narrow side (7), preferably prior to the first activation, a weak line (16, 17) is introduced by a material-removing method into the edge lamination material (6) on its side facing the narrow side, whereby a notch or furrow is milled or cut into the edge lamination material (6) wherein at least one activation, preferably the first activation, is carried out by a laser or hot gas stream, more particularly air stream.

2. Method according to claim 1 **characterised in that** a further activation of the function layer (18) of the edge lamination material (6) is carried out to enable a permanent connection between the edge lamination material (6) and a rounded region (12) of the narrow side (7).

3. Method according to one of the preceding claims **characterised in that** a further activation of the function layer (18) of the edge lamination material (6) is carried out to enable a permanent connection between the edge lamination material and the rebated region (20, 12, 23) of the narrow side (7).

4. Method according to one of the preceding claims **characterised in that** prior to the further activation to enable a permanent connection between the edge lamination material (6) and the rebated region (20, 12, 23) of the narrow side, more particularly after the first activation, a weak line (16) is introduced into the edge lamination material (6).

5. Method according to one of the preceding claims **characterised in that** at least a further activation, preferably the activation to enable a connection between the edge lamination material (6) and the rebated region (20, 12, 23) of the narrow side (7), is carried out by hot air.

6. Device (1) for manufacturing an edge lamination by applying a lamination material (6), more particularly an edging band, to the more particularly folded narrow side (7), having a projecting region (24) and a rebated region (20, 12, 23), of a flat component (3), more particularly a panel of wood or wood substitute and/or a door, wherein the device (1) has a first activation device (8) for activating a function layer of the edge lamination material, wherein the device (1) is configured so that the edge lamination material (6) can be applied to the rebated region (12, 20, 23) after the edge lamination material (6) has been applied to the projecting region (24) **characterised in that** the device (1) is configured so that a functional layer (18) of an edge lamination (6) already applied in at least a partial surface on a projecting region (24) of the narrow side can be activated by a further activation device (11, 19) and wherein the device has further a device (9) for introducing a weak line into the edge lamination material (6) on its side facing the narrow side (7), which is arranged and set up so that it introduces the weak line prior to the first application of the edge lamination material (6) to the projecting region (24) of the narrow side, preferably prior to the first activation, by a material-removing method by milling or cutting in a notch or furrow into the edge lamination material (6) wherein the device for carrying out the at least one activation, preferably the first activation, is designed to allow the at least one activation to be carried out through a laser or a hot gas stream, more particularly air flow.

7. Device (1) according to claim 6 **characterised in that** the further activation device (11, 19) can be introduced into a gap formed between the narrow side (7), more particularly the rebated region (20,12, 23) and the edge lamination (6) applied to at least a partial surface in order to activate the function layer (18).

8. Device (1) according to claim 6 or 7 **characterised in that** the further activation device comprise a hot air nozzle.

## Revendications

1. Procédé de réalisation d'un revêtement de chant, sachant qu'un matériau de revêtement de chant (6), en particulier une bande de chant, est appliqué sur un côté étroit (7), qui présente une partie en saillie (24) et une partie en retrait (20, 12, 23), et est en particulier rainuré, d'un composant plat (3), en particulier d'une plaque en bois ou en matériau de remplacement de bois et / ou d'une porte et / ou d'un panneau de meuble, sachant qu'une première activation d'une couche fonctionnelle (18), en forme de couche de matière plastique fusible du matériau de revêtement de chant (6) est exécutée, au moins par sections, pour permettre d'obtenir une liaison durable entre le côté étroit (7) et le matériau de revêtement de chant (6), et que le matériau de revêtement de chant (6) est appliqué une première fois sur la partie en saillie (24) du côté étroit, sachant que le matériau de revêtement de chant (6) est appliqué sur la partie en retrait (12, 20, 23) après que le matériau de revêtement de chant ait été appliqué la première fois sur la partie en saillie (24) du côté étroit,
**caractérisé en ce que**
au moins une autre activation de la couche fonctionnelle (18) du matériau de revêtement de chant (6) est effectuée après que le matériau de revêtement de chant (6) ait été déjà appliqué, au moins partiellement, sur le côté étroit, sachant que, avant la première application du matériau de revêtement de chant (6) sur le chant (7), de préférence avant la première activation, une ligne d'affaiblissement (16, 17) est pratiquée, se-Ion un procédé d'enlèvement de matière, dans le matériau de revêtement de chant (6), sur la face de celui-ci qui est orientée vers le côté étroit, une rainure ou un sillon étant fraisé ou découpé dans le matériau de revêtement de chant (6), sachant qu'au moins une activation, de préférence la première activation, est exécutée au moyen d'un laser ou d'un flux de gaz chaud, en particulier d'un flux d'air.

2. Procédé selon la revendication 1,
**caractérisé en ce que**
l'on procède à une autre activation de la couche fonctionnelle (18) du matériau de revêtement de chant (6) pour permettre d'obtenir une liaison durable entre le matériau de revêtement de chant (6) et une partie arrondie (12) du côté étroit (7).

3. Procédé selon l'une des revendications précédentes,
**caractérisé en ce que**
l'on procède à une autre activation de la couche fonctionnelle (18) du matériau de revêtement de chant (6) pour permettre l'obtention une liaison durable entre le matériau de revêtement de chant et la partie en retrait (20, 12, 23) du côté étroit (7).

4. Procédé selon l'une des revendications précédentes,
**caractérisé en ce que**,
avant l'autre activation permettant l'obtention d'une liaison durable entre le matériau de revêtement de chant (6) et la partie en retrait (20, 12, 23), en particulier après la première activation, une ligne d'affaiblissement (16) est pratiquée dans le matériau de revêtement de chant (6).

5. Procédé selon l'une des revendications précédentes,
**caractérisé en ce que**
au moins une autre activation, de préférence l'activation permettant l'obtention d'une liaison entre le matériau de revêtement de chant (6) et la partie en retrait (20, 12, 23) du côté étroit (7), est exécutée à l'air chaud.

6. Dispositif (1) destiné à la réalisation d'un revêtement de chant par application d'un matériau de revêtement de chant (6), en particulier d'une bande de chant, sur le côté étroit (7), qui présente une partie en saillie (24) et une partie en retrait (20, 12, 23), et est en particulier rainuré, d'un composant plat (3), en particulier d'une plaque en bois ou en matériau de remplacement de bois et / ou d'une porte, sachant que le dispositif (1) présente une première installation d'activation (8), destinée à l'activation d'une couche fonctionnelle du matériau de revêtement de chant, sachant que le dispositif (1) est conçu de manière à ce que le matériau de revêtement de chant (6) puisse être appliqué sur la partie en retrait (12, 20, 23), après que le matériau de revêtement de chant ait été appliqué sur la partie en saillie (24),
**caractérisé en ce que**
le dispositif (1) est conçu de manière à ce qu'une couche fonctionnelle (18) d'un matériau de revêtement de chant (6) déjà appliqué, au moins par sections, sur une partie en saillie (24) du côté étroit, puisse être activée par une autre installation d'activation (11, 19), et sachant que le dispositif présente en outre une installation (9), qui, destinée à l'exécution d'une ligne d'affaiblissement dans le matériau de revêtement de chant (6), sur la face de celui-ci qui est orientée vers le côté étroit (7), est disposée et aménagée de manière à ce qu'elle pratique, selon un procédé d'enlèvement de matière, par fraisage ou découpe d'une rainure ou d'un sillon dans le matériau de revêtement de chant (6), la ligne d'affaiblissement avant la première application du matériau de revêtement de chant (6) sur la partie en saillie (24), de préférence avant la première activation, sachant que, pour l'exécution de l'au moins une activation, de préférence de la première activation, le dispositif est conçu pour faire exécuter l'au moins une activation au moyen d'un laser ou d'un flux de gaz chaud, en particulier d'un flux d'air.

7. Dispositif (1) selon la revendication 6,
**caractérisé en ce que**,
l'autre installation d'activation (11, 19) peut être insérée dans un interstice, qui est formé entre le côté étroit (7), en particulier la partie en retrait (20, 12, 23), et le revêtement de chant (6) appliqué au moins partiellement, pour l'activation de la couche fonctionnelle (18).

8. Dispositif (1) selon revendication 6 ou 7,
**caractérisé en ce que**
l'autre installation d'activation présente une buse à air chaud.
